# EUROPEAN PATENT SPECIFICATION

(11) **EP 3 512 106 B1**
(45) Date of publication and mention of the grant of the patent: **01.06.2022**
(21) Application number: 17848133.9
(22) Date of filing: 06.09.2017
(51) Int. Cl.: H04B 1/719, H04J 11/00, G01S 1/02, G01S 5/02

(54) **METHOD AND APPARATUS FOR POSITIONING INTERFERENCE SOURCE**
VERFAHREN UND VORRICHTUNG ZUR POSITIONIERUNG EINER INTERFERENZQUELLE
PROCÉDÉ ET APPAREIL DE POSITIONNEMENT D'UNE SOURCE D'INTERFÉRENCE

(30) Priority: 12.09.2016 CN 201610817178
(43) Date of publication of application: 17.07.2019
(73) Proprietor: ZTE Corporation, Shenzhen, Guangdong 518057 (CN)
(72) Inventor: CHEN, Haihong, Shenzhen Guangdong 518057 (CN); QIN, Hongfeng, Shenzhen Guangdong 518057 (CN); WANG, Wenfang, Shenzhen Guangdong 518057 (CN); ZENG, Zhaohua, Shenzhen Guangdong 518057 (CN)
(74) Representative: Aipex B.V.
(86) International application number: PCT/CN2017/100687
(87) International publication number: WO 2018/045960

(56) References cited:
- WO-A2-2008/151057
- CN-A- 103 139 813
- CN-A- 104 185 189
- CN-A- 104 519 501
- CN-A- 105 530 701
- ZHU, BIN: "TD-LTE Interference Location and its Solution Based on Actual Network", Mobile Communications, no. 4, 29 February 2016 (2016-02-29), pages 5-9,13, XP009513839, CN ISSN: 1006-1010

## Description

### TECHNICAL FIELD

The present disclosure relates to a field of wireless communications, for example, to a method and apparatus for positioning an interference source.

### BACKGROUND

A time division long term evolution (TD-LTE) system requires base stations to maintain strict time synchronization. The global positioning system (GPS) synchronization is generally used to ensure timing synchronization between base stations. Inter-cell interference between neighboring cells exists because of networking under a common-frequency coverage. Since an uplink transmission and a downlink transmission share frequency in the TD-LTE system, a situation in which downlink signals of a remote base station interferes with uplink signals of a target cell exists in addition to the traditional inter-cell interference.

Due to propagation characteristics of electromagnetic waves, in some scenarios, such as in a good air propagation condition and an atmospheric duct effect, long-distance same frequency interference in the TD-LTE system may occur between base stations which are far from each other (such as tens or hundreds of kilometers away). Further, after the downlink signals of a remote transmitting source being delayed arrives a near-end target base station under the same frequency through the propagation, the downlink signals may enter other transmission slots of the target base station, thereby interfering the normal operation of the near-end target system, and such interference may be cumulated by multiple base stations.

In practical applications, transmitting a specific custom pilot sequence in a certain slot of a cell implementing the interference may take into consideration, then the specific "custom pilot sequence" is detected on an interfered cell side. Here, the "custom pilot sequence" is called "special pilot". Since the "special pilot" is one-to-one corresponds to the cell implementing the interference in a certain manner, the interfered cell can know which remote cell implements interference on it by detecting the corresponding "special pilot".

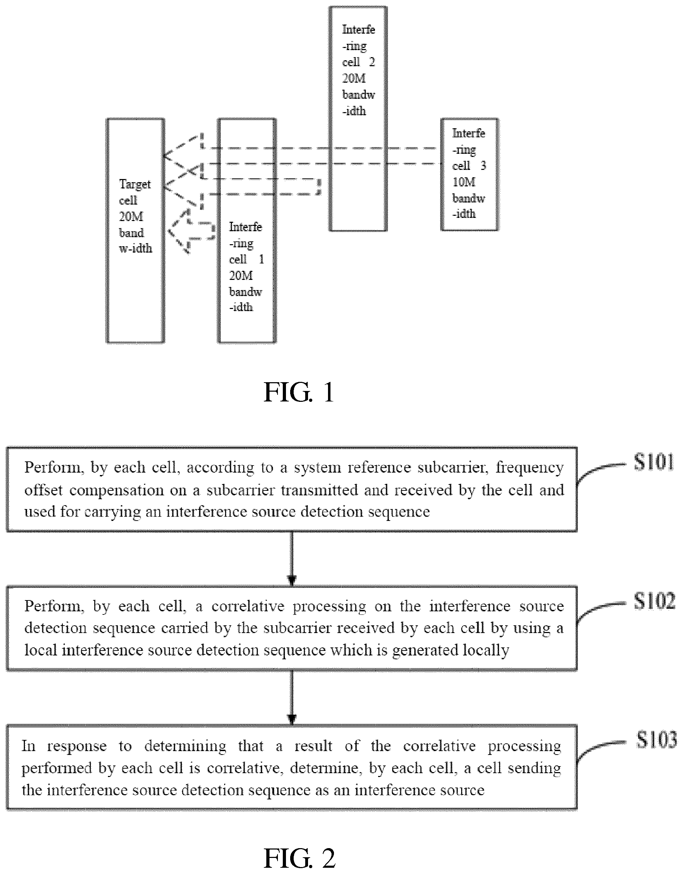

In practical systems with different bandwidths, scenarios in which different bandwidths interfere with each other exist. So through the above-mentioned design scheme of the "special pilot", the following cases exist.
1. A receiving end needs to traverse all possible bandwidth combinations. The number of "special pilot" sequences in the system is large. The detection of the receiving end needs to traverse various bandwidth combinations, the complexity is high. FIG. 1 is a schematic diagram of atmospheric duct of various bandwidths of T provided by the existing art. As shown in FIG. 1, the system is composed of 20M and 10M.The target cell is interfered by three cells, if the design of the "special pilot" sequence is that 20M corresponds to a sequence and 10M corresponds to a sequence, then the target cell needs to traverse the following several detections to know which cell implements the interference, including: within the 20M bandwidth, detecting the sequence corresponding to 20M; within an upper-half 10M bandwidth, detecting a lower half of the sequence corresponding to 20M; and within the upper-half 10M bandwidth, detecting the sequence corresponding to 10M. In addition, the traverse detection that needs to be done is different for different target cell. The whole system is fairly complex.
2. The subcarriers of different cells may not be completely aligned in the frequency domain. If the receiving end performs frequency compensation, the complexity will be increased. And if the receiving end does not perform the frequency compensation, a certain performance loss will be caused.

Further relevant technologies are also known from CN 104519501 A, (TD TECH LTD) 15 April 2015 (2015-04-15), and CN105530701 A, (BEIJING NORTHERN FIBERHOME TECHNOLOGIES CO., LTD.) 27 April 2016 (2016-04-27).

### SUMMARY

Technical solutions provided by embodiments of the present disclosure reduce the complexity of positioning interference source by the system. The feature of the method and apparatus according to the present invention are defined in the independent claims. Further improvements are provided in the dependent claims.

Through embodiments of the present disclosure, when a system has aliasing of multiple different bandwidths, it does not require to traverse and detect various aliasing scenarios but only requires to detect relevant possible sequences in the aliasing bandwidths to position the interfering cell, thereby reducing positioning complexity and increasing calculation speed.

### BRIEF DESCRIPTION OF DRAWINGS

FIG. 1 is a schematic diagram of atmospheric duct of various bandwidths of T provided by the existing art;
FIG. 2 is a flowchart of positioning an interference source provided by an embodiment of the present disclosure;
FIG. 3 is a block diagram of an apparatus for positioning an interference source provided by an embodiment of the present disclosure;
FIG. 4 is a schematic diagram illustrating determination of an aliasing bandwidth provided by an embodiment of the present disclosure;
FIG. 5 is an exemplary diagram of aligning subcarriers of cells provided by an embodiment of the present disclosure;
FIG. 6 is a processing diagram illustrating a signal generation mode of an interfering cell 1 provided by an embodiment of the present disclosure;
FIG. 7 is a processing diagram illustrating a signal generation mode of an interfering cell 2 provided by an embodiment of the present disclosure;
FIG. 8 is a processing diagram illustrating a signal generation mode of an interfering cell 3 provided by an embodiment of the present disclosure;
FIG. 9 is a flowchart of receiving of a receiving end signal of a 20M target cell provided by an embodiment of the present disclosure;
FIG. 10 is a flowchart of receiving of a receiving end signal of a 20M interfering cell 1 provided by an embodiment of the present disclosure;
FIG. 11 is a flowchart of receiving of a receiving end signal of a 20M interfering cell 2 provided by an embodiment of the present disclosure;
FIG. 12 is a flowchart of receiving of a receiving end signal of a 10M interfering cell 3 provided by an embodiment of the present disclosure; and
FIG. 13 is a structure diagram of an electronic device provided by an embodiment of the present disclosure.

### DETAILED DESCRIPTION

Embodiments of the present disclosure will be described in detail in conjunction with the drawings, and the embodiments described hereinafter are intended to describe and explain the present disclosure and not to limit the present disclosure.

FIG. 2 is a flowchart of positioning an interference source provided by an embodiment of the present disclosure. As shown in FIG.2, steps described below are included.

In step S101, each cell performs, according to a system reference subcarrier, frequency offset compensation on a subcarrier transmitted and received by the cell and used for carrying an interference source detection sequence. Each cell performs, according to the system reference subcarrier, frequency offset compensation on the subcarrier transmitted by the cell and used for carrying the interference source detection sequence, so that the subcarrier transmitted by each cell and used for carrying the interference source detection sequence is aligned with the system reference subcarrier. Each cell performs, according to the system reference subcarrier, the frequency offset compensation on the subcarrier received by the cell and used for carrying the interference source detection sequence, so that the received subcarrier used for carrying the interference source detection sequence is aligned with the subcarrier in the cell. For example, the subcarrier of cell 1 is 20 kHz, the subcarrier of cell 2 is 21 kHz, and the system reference subcarrier is 15 kHz. During signal generation, cell 1 needs to perform the frequency offset compensation on the subcarrier transmitted by cell 1 itself, and the compensation value is -5 kHz, so that the subcarrier transmitted by cell 1 is aligned with the system reference subcarrier; cell 2 performs, according to the system reference subcarrier, the frequency offset compensation on the subcarrier transmitted from cell 1 and received by cell 2, and the compensation value is 6 kHz, so that the subcarrier received by cell 2 is aligned with the subcarrier of cell 2.

If the subcarrier of a target cell is used as the system reference subcarrier, the target cell performs zero frequency offset compensation on the subcarrier transmitted and received by the target cell itself and used for carrying the interference source detection sequence, i.e., the value of the frequency offset compensation is zero. On the other hand, a cell other than the target cell takes the subcarrier of the target cell as a reference, and performs the frequency offset compensation on the subcarrier transmitted and received by the cell itself and used for carrying the interference source detection sequence, so that the subcarrier transmitted by the cell and used for carrying the interference source detection sequence is aligned with the subcarrier of the target cell and the subcarrier received by the cell and used for carrying the interference source detection sequence is aligned with its local subcarrier.

Before performing, according to the system reference subcarrier, the frequency offset compensation on the subcarrier transmitted by each cell and used for carrying the interference source detection sequence, each cell transforms, according to a total number of subcarriers included in an aliasing bandwidth generated due to bandwidth overlapping between cells, a pilot sequence into the interference source detection sequence; and performs an inverse fast fourier transformation on the transformed interference source detection sequence to obtain time domain data corresponding to the interference source detection sequence.

For example, the bandwidth of cell a is 2^{n∗}B, an aliasing bandwidth is B, and the aliasing bandwidth includes N_{subcarrier}. The length of a pilot sequence of cell a is N_{sequence}, and N_{sequence} is less than Nsubcarrier. In this case, in a transmitting direction, cell a firstly extends its pilot sequence by a 0 interpolation processing, so that the length of the extended sequence is equal to N_{subcarrier}; secondly, the cell performs an exchange processing on positive frequency data and negative frequency data in the extended sequence, and obtains the interference source detection sequence by performing the 0 interpolation processing on the middle of the sequence obtained by the exchange processing. The length of the sequence is N_{FFT}, then by an inverse fast fourier transformation and the like, the cell performs a transformation processing from a frequency domain to a time domain on the interference source detection sequence. For cell a, the transformation from the frequency domain to the time domain needs to be performed after the length of the interference source detection sequence is extended to 2^{n∗} N_{FFT}, and the time domain data corresponding to the interference source detection sequence is obtained. Next, cell a adds cyclic shift data to the obtained time domain data and sends it out after performing the frequency compensation on the subcarrier of cell a. In a receiving direction, cell a removes the cyclic shift data from data of a symbol in which the received pilot sequence is located, and performs the frequency compensation on the subcarrier of the received data.

The interference source detection sequence with the length of N_{FFT} may be extended to a sequence with a length of 2^{n∗} N_{FFT} by multiple modes: such as by jointing 2ⁿ interference source detection sequences to obtain the sequence with the length of 2^{n∗} N_{FFT}, and by jointing other sequences to obtain the sequence with the length of 2^{n∗} N_{FFT}.

In step S102, each cell performs a correlative processing on the interference source detection sequence carried by the subcarrier received by the cell by using a local interference source detection sequence which is locally generated.

In step S102, each cell performs a conjugate dot product processing in the frequency domain on the local interference source detection sequence which is generated locally and the interference source detection sequence carried by the received subcarrier to obtain correlative frequency domain data; and performs the inverse fast fourier transformation on the obtained correlative frequency domain data to obtain correlative time domain data.

Based on the total number of subcarriers included in the aliasing bandwidth generated due to bandwidth overlapping between cells, each cell transforms a locally saved pilot sequence of another cell into the local interference source detection sequence. For example, cell a extends a locally saved pilot sequence of another cell with the length of N_{subcarrier} by interpolating 0, so that the length of the extended pilot sequence is equal to N_{subcarrier}, and cell a exchanges the positive frequency data and the negative frequency data in the extended sequence, and obtains a local interference source detection sequence by interpolating 0 into the sequence obtained through the exchange. The length of the local interference source detection sequence is N_{FFT}.

Each cell performs a fast fourier transformation on the received time domain data, and extracts the interference source detection sequence from frequency domain data obtained through the fast fourier transformation. For example, cell a performs the fast fourier transformation on the time domain data with the cyclic shift data being removed to obtain frequency domain data with the length of 2^{n∗} N_{FFT}, and extracts the interference source detection sequence with the length of N_{FFT} corresponding to the aliasing bandwidth from the frequency domain data with the length of 2^{n∗}N_{FFT}.

After obtaining the local interference source detection sequence and the interference source detection sequence, a conjugate dot product of the interference source detection sequence and the local interference source detection sequence is used for obtaining the correlative frequency domain data R, then the correlative frequency domain data R is transformed from the frequency domain to the time domain to obtain correlative time domain data R_{t∘}

In step S103, in response to determining that a result of the correlative processing performed by the cell is correlative, each cell determines a cell transmitting the interference source detection sequence as an interference source.

A time domain peak value search is performed on the correlative time domain data Rₜ. to determine whether a result of the correlative processing is correlative. If the correlative time domain data Rₜ. has an apparent peak value, then a known cell corresponding to the local interference source detection sequence is the cell impelementing the interference, that is, the interference source.

The embodiment of the present disclosure adopts an emission and reception detection mode of frequency offset pre-compensated and subcarrier aligned "special pilot (i.e., the custom pilot sequence)", which can reduce the complexity of the system.

It will be understood by those of ordinary skill in the art that all or part of the steps in the methods of the above embodiments may be implemented by related hardware instructed by one or more computer programs, these programs may be stored in a computer-readable storage medium, and during the execution of these programs, steps S101 to S103 are included. The storage medium may be a read only memory (ROM)/random access memory (RAM), a magnetic disk, an optical disk and the like.

For example, the present disclosure further provides a computer-readable storage medium, which is configured to store computer-executable instructions for executing the method in any embodiment described above.

The computer-readable storage medium may be a transitory computer-readable storage medium or a non-transitory computer-readable storage medium.

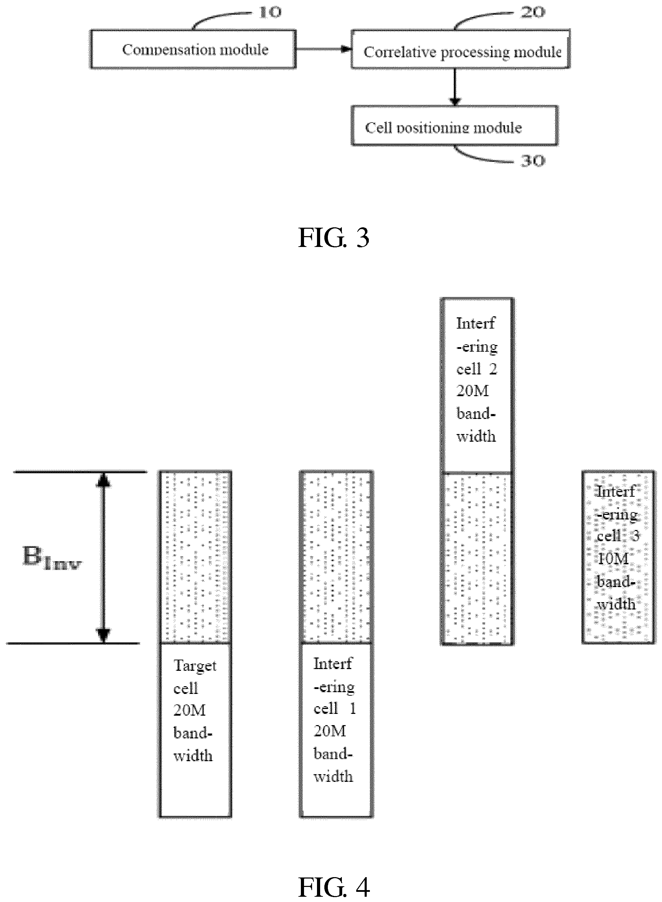

FIG. 3 is a block diagram of an apparatus for positioning an interference source provided by an embodiment of the present disclosure. As shown in FIG.3, the apparatus includes a compensation module 10, a correlative processing module 20 and a cell positioning module 30.

The compensation module 10 is configured to perform, according to a system reference subcarrier, frequency offset compensation on a subcarrier transmitted and received and used for carrying an interference source detection sequence, so that the subcarrier received by each cell and used for carrying the interference source detection sequence is aligned with the system reference subcarrier. The compensation module 10 is further configured to, before performing the frequency offset compensation on the subcarriers transmitted and used for carrying the interference source detection sequence, transform, according to a total number of subcarriers included in an aliasing bandwidth generated due to bandwidth overlapping between cells, a pilot sequence of the cell into the interference source detection sequence; and perform an inverse fast fourier transformation on the interference source detection sequence transformed to obtain time domain data corresponding to the interference source detection sequence.

The correlative processing module 20 is configured to perform a correlative processing on the interference source detection sequence carried by the subcarriers received by the cell based on a local interference source detection sequence which is generated locally. The correlative processing module 20 firstly performs a fast fourier transformation on the received time domain data, and extracts the interference source detection sequence from frequency domain data obtained from the fast fourier transformation, and transforms, according to the total number of subcarriers included in the aliasing bandwidth generated due to bandwidth overlapping between cells, a locally saved pilot sequence of another cell into the local interference source detection sequence, then performs a conjugate dot product processing in the frequency domain on the local interference source detection sequence which is generated locally and the interference source detection sequence carried by the received subcarrier to obtain correlative frequency domain data; and performs the inverse fast fourier transformation on the obtained correlative frequency domain data to obtain correlative time domain data.

The cell positioning module 30 is configured to determine a cell transmitting the interference source detection sequence as an interference source in response to determining that a result of the correlative processing is correlative. The cell positioning module 30 determines, by performing a time domain peak value search of the correlative time domain data, whether a result of the correlative processing is correlative. If the correlative time domain data has an apparent peak value, then a known cell corresponding to the local interference source detection sequence is the interference source.

The embodiment of the present disclosure is capable of positioning a cell where the interference source is located based on the pilot sequence. A transmitting end of the whole system transmits a signal according to the "special pilot" design scheme of the embodiment of the present disclosure, and a receiving end detects the relevant "special pilot" according to the detection process provided by the embodiment of the present disclosure so as to position the cell in which the interference signal is located, that is, positioning the cell implementing the interference.

The embodiment of the present disclosure will be described below in conjunction with FIGS. 4~6.

The cell implementing the interference transmits a specific custom pilot sequence (i.e., "special pilot") in a specific time domain and frequency domain resource,. The interfered cell detects the specific custom pilot sequence (i.e., "special pilot") in the specific time domain and frequency domain resource. The custom pilot transmitted by each cell is known to all other cells in the system.

If multiple bandwidth combinations are provided in the whole system, bandwidth overlapping exists between these bandwidth combinations. An aliasing area of the bandwidth combinations is called as an aliasing bandwidth in the embodiment of the present disclosure, such as aliasing bandwidth B_{1nv_x.} FIG. 4 is a schematic diagram illustrating determination of an aliasing bandwidth provided by an embodiment of the present disclosure. The aliasing bandwidth Bₗₙᵥ includes N_{subcarrier} subcarriers after a certain guard bandwidth is removed from the aliasing bandwidth Bₗₙᵥ. The aliasing bandwidth of the whole system may be one or more pieces of B_{lnv_x.} Each aliasing bandwidth is processed in the same manner. So only a processing flow of a certain aliasing bandwidth Bₗₙᵥ is described below.

Non-aliasing bandwidth portions may be processed in the same way as the aliasing bandwidth portions, or may be not processed, which does not affect the function of positioning the interference of the system.

In the aliasing bandwidth, the subcarriers of two cells are not completely aligned. As shown in FIG. 4, assuming that the subcarriers of the target cell and interfering cell 1 are aligned, that is, the frequency offset between the subcarriers of the target cell and interfering cell 1 is 0Hz. The subcarriers of the target cell and interfering cell 2 are not aligned, and the unaligned frequency offset between the subcarriers of the target cell and interfering cell 2 is f_20Hz. The subcarriers of the target cell and interfering cell 3 are not aligned, and the unaligned frequency offset between the subcarriers of the target cell and interfering cell 3 is f_30Hz. The whole system defines a "system subcarrier reference" (i.e., the system reference subcarrier), and the subcarriers of all cells take the system subcarrier reference as a reference. The transmitting end performs corresponding frequency offset pre-compensation (i.e., a frequency compensation), so that the carrier for transmitting signal is aligned with the system subcarrier reference. The receiving end performs the corresponding frequency offset pre-compensation, so that the carrier for receiving signal is aligned with the subcarrier of the receiving end. For example, if the system takes the carrier in which the target cell is located as the "system subcarrier reference", interfering cell 2 needs to perform a frequency offset pre-compensation of f_20Hz at the transmitting end and/or the receiving end, and interfering cell 3 needs to perform a frequency offset pre-compensation of f_30Hz at the transmitting end and/or the receiving end

Each cell in the system designs the pilot sequence by taking the aliasing bandwidth Bₗₙᵥ as a basic unit. The pilot sequence may be a m sequence, a gold sequence, a Zadoff-chu (ZC) sequence or other sequences having good autocorrelation and poor cross-correlation.

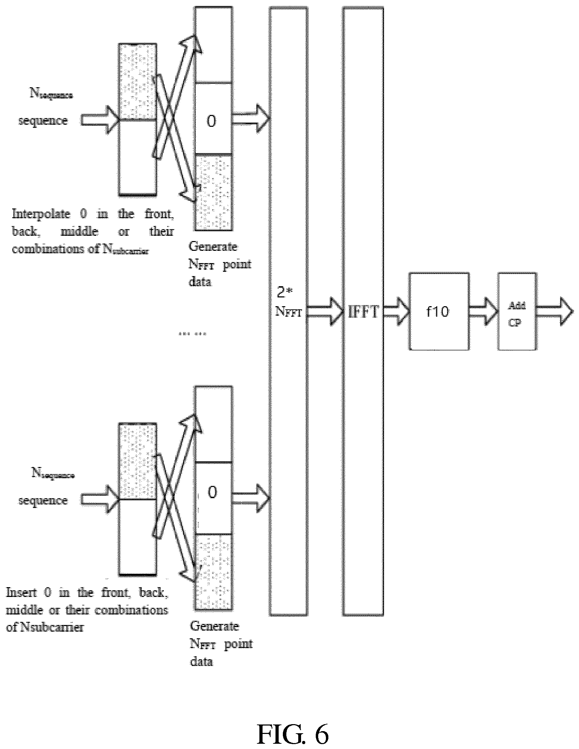

The length of the designed pilot sequence is less than N_{subcarrier} and is denoted as N_{sequence}. 0 is interpolated in the front or the back or the middle of the special pilot sequenc with the length of N_{sequence}, or is interpolated in two or three of the front, the back and the middle of the special pilot sequenc with the length of N_{sequence}. Thus, the length of the special pilot sequenc changes into Nsubcarrier.Then, the positive frequency and the negative frequency are exchanged and 0 is interpolated so that the lenghth changes into N_{FFT}. Then, a N_{FFT} point inverse fast fourier transform (IFFT) operation is performed to generate N_{FFT} point time domain data. The corresponding frequency offset pre-compensation is performed on the time domain data, then N_{cp} point cyclic prefix (CP) data is added and sent out, as shown in FIGS. 6~8.

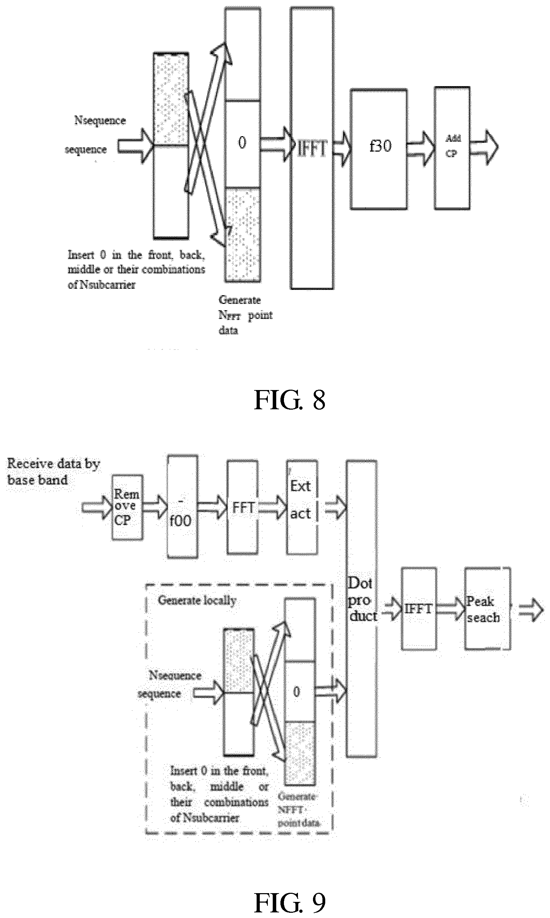

After receiving (N_{cp}+2ⁿ*N_{FFT}) (n=0, 1, 2...) point data of the symbol in which the "special pilot" is located, the receiving end removes N_{cp} point CP data, and then performs the fast fourier transform (FFT) operation to obtain 2^{n∗}N_{FFT} point frequency domain data, extracts N_{FFT} point time domain data corresponding to the aliasing bandwidth to obtain Y_{inv.} At the same time, with respect to all possible special pilot sequence with the length of N_{sequence} in the system, the receiving end generates frequency domain data S in the local in the same mode of the cell implementing the interference. R=S^{∗}·^{∗} Yᵢₙᵥ, and the conjugate dot product operation of S and Yᵢₙᵥ.is made. The N_{FFT} point IFFF operation is performed on R to obtain the time domain data Rₜ. of the N_{FFT} point. If the sequence of the local and the sequence of the transmitting end are the same, then Rₜ will have a very apparent peak value. Based on this, the receiving end may determine the cell from which the interference comes, as shown in FIGS. 9~12.

The signal generation mode of the transmitting end in the embodiment of the present disclosure includes the pilot design and signal generation mode of a cell with a bandwidth of Bₗₙᵥ, How to generate the time domain data from each Bₗₙᵥ frequency domain data may have multiple modes, and only one mode is provided in the embodiment of the present disclosure.

The signal generation mode of the transmitting end includes the pilot design and signal generation mode of a cell with a bandwidth of 2^{n∗}Bₗₙᵥ (n=0, 1, 2...). How to generate the time domain data from each Bₗₙᵥ frequency domain data may have multiple modes, and only one mode is provided in the embodiment of the present disclosure.

The signal detection of the receiving end in the embodiment of the present disclosure only needs to be implemented at the aliasing bandwidth.

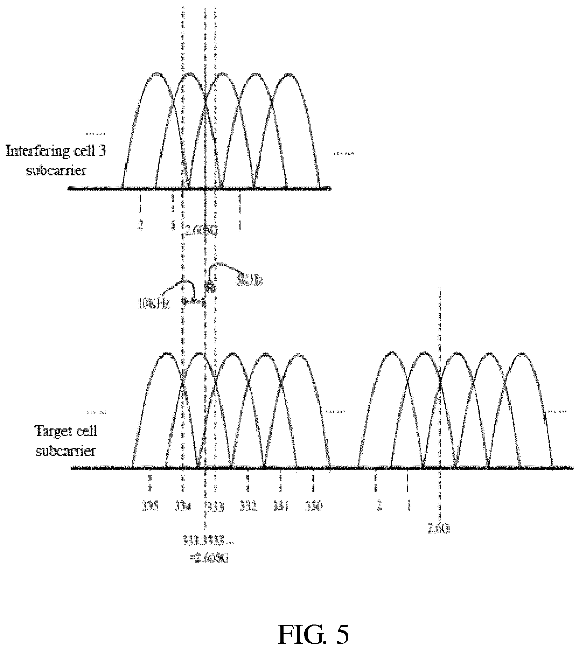

FIG. 5 is an exemplary diagram of aligning subcarriers of cells provided by an embodiment of the present disclosure. As shown in FIG. 5, an example in which the subcarriers are not aligned is that: a RF carrier frequency of the target cell is 2.6G, a RF carrier frequency of interfering cell 3 is 2.605G, 1M guard bandwidth is provided on both the upper segment and the lower segment of the 20M bandwidth and 0.5M guard bandwidth is provided on both the upper segment and the lower segment of the 10M cell. The unaligned situation of the subcarriers of the two cells is shown in FIG. 5. If the system takes the subcarrier of the target cell as the "system subcarrier reference", interfering cell 3 needs to pre-compensate the frequency offset of (15000^{∗}i -5000) Hz or (15000^{∗}i+10000) Hz (generally the frequency offset value of the pre-compensation is less than 15KHz).

The embodiment of the present disclosure will be described below in conjunction with FIGS. 6~12. In FIGS. 6~12,
f00 is a frequency offset value between the subcarrier of the target cell and its own "system subcarrier reference", and is actually equal to 0HZ;
f10 is a frequency offset value between the subcarrier of interfering cell 1 and the "system subcarrier reference" of the target cell.
f20 is a frequency offset value between the subcarrier of interfering cell 2 and the "system subcarrier reference" of the target cell.
f30 is a frequency offset value between the subcarrier of interfering cell 3 and the "system subcarrier reference" of the target cell.

The system takes the subcarrier of the target cell as the "system subcarrier reference", and the signal generation mode of interfering cell 1 is shown in FIG. 6. The steps includes that: interfering cell 1 interpolates 0 in the pilot sequence with the length of N_{sequence}, such as interpolating 0 in the front or the back or the middle of the sequence or interpolating 0 in two or three of the front, the back and the middle of the sequence to obtain the sequence with the length of Nsubcarrier. Next, the positive frequency and the negative frequency are exchanged and 0 is interpolated in the middle of the sequence to obtain the interference source detection sequence with the length of N_{FFT}. 2 sequences with the length of N_{FFT} are jointed into a sequence with the length of 2^{∗}N_{FFT}, and the IFFT transformation is performed on the sequence with the length of 2^{∗}N_{FFT}, to obtain the time domain data corresponding to the interference source detection sequence. After the frequency compensation is performed (compensating according to a frequency offset value of f10) on the subcarrier of interfering cell 1, CP data is added into the obtained time domain data and the time domain data is sent out.

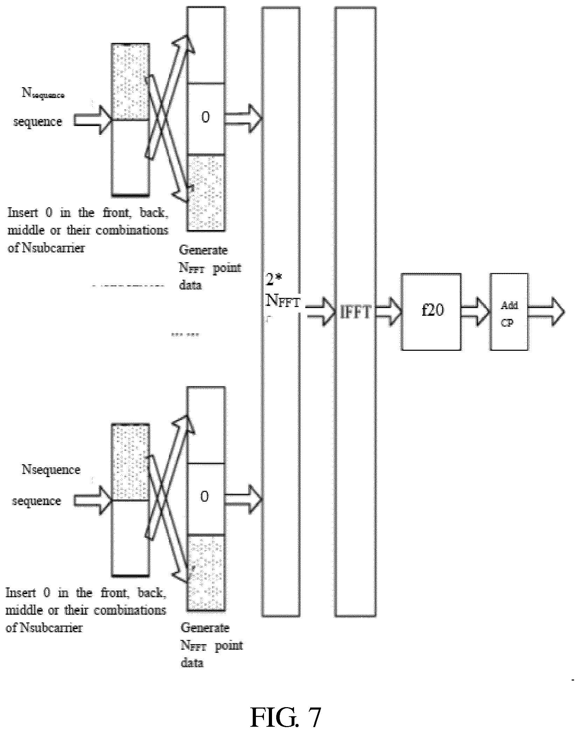

FIG. 7 is a processing diagram illustrating a signal generation mode of interfering cell 2 provided by an embodiment of the present disclosure. As shown in FIG. 7, interfering cell 2 interpolates 0 in the pilot sequence with the length of N_{sequence}, such as interpolating 0 in the front or the back or the middle of the sequence or interpolating 0 in two or three of the front, the back and the middle of the sequence to obtain a sequence with the length of N_{subcarrier}. Then, the positive frequency and negative frequency are exchanged in the sequence with the length of N_{subcarrier}, and 0 is interpolated in the middle of the sequence with the length of N_{subcarrier} to obtain the interference source detection sequence with the length of N_{FFT}. Two sequences with the length of N_{FFT} are jointed into a sequence with the length of 2^{∗}N_{FFT}, and the IFFT transformation is performed on the sequence with the length of 2^{∗}N_{FFT} to obtain time domain data corresponding to the interference source detection sequence. After the frequency compensation is performed (compensating according to a frequency offset value of f20) on the subcarrier of interfering cell 2, CP data is added into the obtained time domain data and the time domain data is sent out.

FIG. 8 is a processing diagram illustrating a signal generation mode of interfering cell 3 provided by an embodiment of the present disclosure. As shown in FIG. 8, interfering cell 3 interpolates 0 in the pilot sequence with the length of N_{sequence}, such as interpolating 0 in the front or the back or the middle of the sequence or interpolating 0 in two or three of the front, the back and the middle of the sequence to obtain a sequence with the length of N_{subcarrier}. Then, the positive frequency and negative frequency are exchanged in the sequence with the length of N_{subcarrier}, and 0 is interpolated in the middle of the sequence with the length of N_{subcarrier} to obtain the interference source detection sequence with the length of N_{FFT}.. The IFFT transformation is performed on the sequence with the length of N_{FFT} to obtain the time domain data corresponding to the interference source detection sequence. After the frequency compensation is performed (compensating according to a frequency offset value of f30) on the subcarrier of interfering cell 3, CP data is added into the obtained time domain data and is sent out.

The sequences of the three cells may be different or the same. When the sequences of the three cells are the same, the cells may be distinguished from each other by other information, and the information is agreed in the whole system.

FIG. 9 is a flowchart of receiving of a receiving end signal of a 20M target cell provided by an embodiment of the present disclosure. As shown in FIG. 9, the 20M target cell removes the CP data from data of a symbol in which the received pilot sequence is located, and performs the frequency compensation (compensating according to a frequency offset value of -f00) on the subcarrier receiving data. The 20M target cell performs the FFT transformation on the time domain data with the CP data being removed to obtain frequency domain data with the length of 2^{n∗}N_{FFT}, and extracts the interference source detection sequence Yᵢₙᵥ with the length of N_{FFT} corresponding to the aliasing bandwidth from the frequency domain data with the length of 2^{n∗}N_{FFT}. In addition, the target cell interpolates 0 in the locally saved pilot sequences of other cells which have the length of N_{subcarrier} to obtain the sequence with the length of N_{subcarrier}, and the positive frequency and the negative frequency are exchanged in the sequence with the length of N_{subcarrier} and 0 is interpolated in the sequence with the length of N_{subcarrier} to obtain the local interference source detection sequence S. The length of the local interference source detection sequence is N_{FFT}. The target cell obtains the correlative frequency domain data R by using the formula R= S^{∗}. ^{∗}Yᵢₙᵥ, performs a N_{FFT} point IFFF operation on R to obtain N_{FFT} point time domain data Rt, and then performs a time domain peak value search. If Rₜ has a very apparent peak value, then a cell corresponding to the local interference source detection sequence S is the interfering cell.

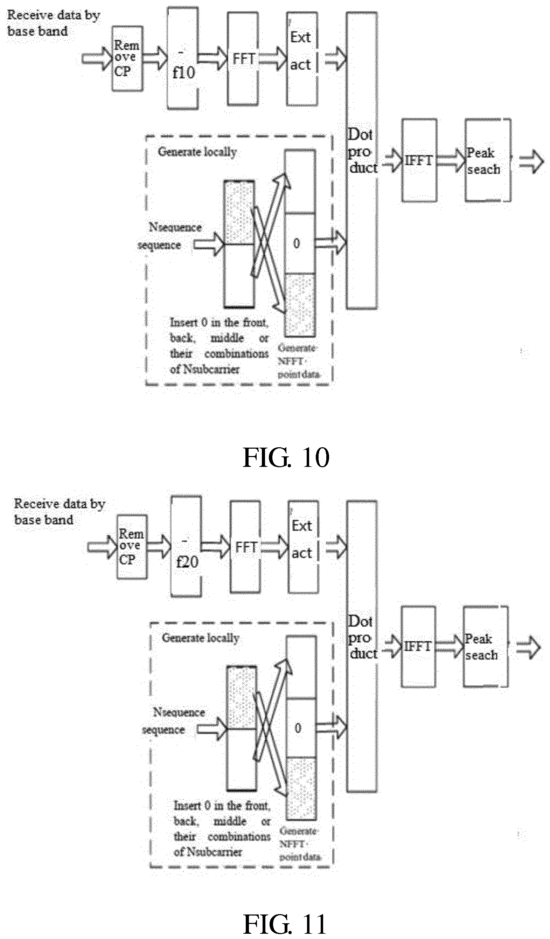

FIG. 10 is a flowchart of receiving of a receiving end signal of a 20M interfering cell 1 provided by an embodiment of the present disclosure. Compared with the embodiment shown in FIG. 9, the difference merely lies in that compensation is made according to a frequency offset value -f10 when performing frequency compensation, and will not be described here again.

FIG. 11 is a flowchart of receiving of a receiving end signal of a 20M interfering cell 2 provided by an embodiment of the present disclosure. Compared with the embodiment shown in FIG. 9, the difference merely lies in that compensation is made according to a frequency offset value -f20 when performing frequency compensation, and will not be described here again.

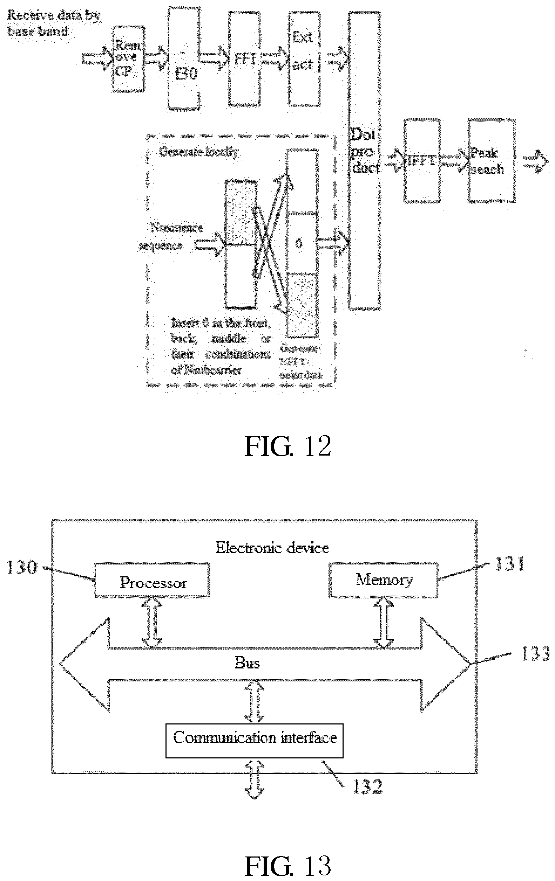

FIG. 12 is a flowchart of receiving of a receiving end signal of a 10M interfering cell 3 provided by an embodiment of the present disclosure. Compared with the embodiment shown in FIG. 9, the difference merely lies in that compensation is made according to a frequency offset value -f30 when performing frequency compensation, and will not be described here again.

The technical solutions of the present disclosure may be embodied in the form of a software product. The software product is stored in a storage medium, including one or more instructions for enabling a computer device (which may be a personal computer, server, network device, etc.) to execute all or part of the steps of the method in the embodiments of the present disclosure. The foregoing storage medium may be a non-transitory storage medium, including a U disk, mobile hard disk, read only memory (ROM), random access memory (RAM), magnetic disk, optical disk or another medium that can store program codes, or may be a transitory storage medium.

The embodiments of the present disclosure do not require to traverse and detect various aliasing scenarios when a system has aliasing of multiple different bandwidths, while only require to detect relevant possible sequences in the aliasing bandwidths to position the interfering cell.While the present disclosure has been described in detail, but is not limited to this. Those skilled in the art can make various modifications according to the embodiments of the present disclosure. Therefore, modifications made according to the embodiments of the present disclosure are within the scope of the present disclosure as defined by the appended claims.

## Claims

1. A method for positioning an interference source, applied to a cell in a time division long term evolution, TD-LTE, system, **characterized in that** the method comprises:
performing (S101), by the cell, according to a system reference subcarrier, a frequency offset compensation on a subcarrier to be transmitted by the cell and used for carrying an interference source detection sequence to obtain a compensated to-be-transmitted subcarrier aligned with the system reference subcarrier, and performing, by the cell, according to the system reference subcarrier, a frequency offset compensation on a subcarrier received by the cell and used for carrying an interference source detection sequence to obtain a compensated received subcarrier aligned with a local subcarrier of the cell ;
performing (S102), by the cell, a correlative processing on the interference source detection sequence carried by the subcarrier received by the cell by using a local interference source detection sequence which is generated locally; and
in response to determining that a result of the correlative processing performed by the cell is correlative, determining (SI03), by the cell, a cell transmitting the interference source detection sequence as the interference source;
wherein the system reference subcarrier is defined by the TD-LTE system, the frequency offset compensation refers to compensation for a frequency offset relative to the system reference subcarrier.

2. The method of claim 1, wherein before the performing (S101), by the cell, according to the system reference subcarrier, the frequency offset compensation on the subcarrier to be transmitted by the cell and used for carrying the interference source detection sequence to obtain the compensated to-be-transmitted subcarrier aligned with the system reference subcarrier, and performing, by the cell, according to the system reference subcarrier, the frequency offset compensation on the subcarrier received by the cell and used for carrying the interference source detection sequence to obtain the compensated received subcarrier aligned with the local subcarrier of the cell, the method further comprises:
transforming, by the cell, a pilot sequence into the interference source detection sequence according to a total number of subcarriers comprised in an aliasing bandwidth generated due to bandwidth overlapping between cells; and
performing an inverse fast fourier transformation on the interference source detection sequence transformed to obtain time domain data corresponding to the interference source detection sequence.

3. The method of claim 2, the performing (S102), by the cell, the correlative processing on the interference source detection sequence carried by the subcarrier received by the cell by using a local interference source detection sequence which is generated locally comprises:
performing, by the cell, a conjugate dot product processing in a frequency domain on the local interference source detection sequence which is generated locally and the interference source detection sequence carried by the subcarrier received by the cell to obtain correlative frequency domain data; and
performing an inverse fast fourier transformation on the correlative frequency domain data obtained to obtain correlative time domain data.

4. The method of claim 3, the local interference source detection sequence is obtained by:
transforming, by the cell, locally saved pilot sequence of other cells into the local interference source detection sequence according to a total number of subcarriers comprised in the aliasing bandwidth generated due to bandwidth overlapping between cells.

5. The method of claim 3, the interference source detection sequence carried by the subcarrier received by the cell is obtained by:
performing, by the cell, a fast fourier transformation on the time domain data received, and extracting the interference source detection sequence from frequency domain data obtained from the fast fourier transformation.

6. The method of claim 3, comprising: determining whether a result of the correlative processing is correlative by performing a time domain peak value search of the correlative time domain data.

7. An apparatus for positioning an interference source, applied to a cell in a time division long term evolution, TD-LTE, system, **characterized in that** the apparatus comprises:
a compensation module (10) configured to perform, according to a system reference subcarrier, a frequency offset compensation on a subcarrier to be transmitted by the cell and used for carrying an interference source detection sequence to obtain a compensated to-be-transmitted subcarrier aligned with the system reference subcarrier, and performing, by the cell, according to the system reference subcarrier, a frequency offset compensation on a subcarrier received by the cell and used for carrying an interference source detection sequence to obtain a compensated received subcarrier aligned with a local subcarrier of the cell;
a correlative processing module (20) configured to perform a correlative processing on the interference source detection sequence carried by the subcarrier received by the cell by using a local interference source detection sequence which is generated locally; and
a cell positioning module (30) configured to, in response to determining that a result of the correlative processing is correlative, determine a cell transmitting the interference source detection sequence as the interference source;
wherein the system reference subcarrier is defined by the TD-LTE system, the frequency offset compensation refers to compensation for a frequency offset relative to the system reference subcarrier.

8. The apparatus of claim 7, wherein the compensation module (10) is further configured to, before performing the frequency offset compensation on the subcarrier to be transmitted and used for carrying the interference source detection sequence to obtain the compensated to-be-transmitted subcarrier aligned with the system reference subcarrier, and performing the frequency offset compensation on the subcarrier received by the cell and used for carrying the interference source detection sequence to obtain the compensated received subcarrier aligned with the local subcarrier of the cell, transform a pilot sequence of the cell into the interference source detection sequence according to a total number of subcarriers comprised in an aliasing bandwidth generated due to bandwidth overlapping between cells; and perform an inverse fast fourier transformation on the interference source detection sequence transformed to obtain time domain data corresponding to the interference source detection sequence.

9. The apparatus of claim 8, wherein the correlative processing module (20) is further configured to perform a conjugate dot product processing in a frequency domain on the local interference source detection sequence which is generated locally and the interference source detection sequence carried by the received subcarrier to obtain correlative frequency domain data; and perform the inverse fast fourier transformation on the correlative frequency domain data obtained to obtain correlative time domain data.

10. The apparatus of claim 8, wherein the correlative processing module (20) is further configured to transform, according to the total number of subcarriers comprised the an aliasing bandwidth generated due to bandwidth overlapping between cells, a locally saved pilot sequence of other cells into the local interference source detection sequence.

11. The apparatus of claim 8, wherein the correlative processing module (20) is further configured to perform a fast fourier transformation on the received time domain data, and extracts the interference source detection sequence from frequency domain data obtained from the fast fourier transformation.

12. The apparatus of claim 9, wherein the cell positioning module (30) is further configured to determine whether a result of the correlative processing is correlative by performing a time domain peak value search of the correlative time domain data.

13. A computer-readable storage medium having stored thereon computer-executable instructions which, when executed by a computer, cause the computer to carry out the steps of the method of any one of claims 1 to 6.

## Patentansprüche

1. Verfahren zur Positionierung einer Interferenzquelle, die an eine Zelle in einem System für Time Division Long Term Evolution, TD-LTE, angelegt ist, **dadurch gekennzeichnet, dass** das Verfahren Folgendes umfasst:
Durchführen (S101), durch die Zelle, gemäß einem Systemreferenzsubträger, einer Frequenzversatzkompensation an einem Subträger, der durch die Zelle zu übertragen ist und zum Tragen einer Interferenzquellendetektionssequenz verwendet wird, um einen kompensierten zu übertragenden Subträger zu erlangen, der mit dem Systemreferenzsubträger abgeglichen ist,
und Durchführen, durch die Zelle, gemäß dem Systemreferenzsubträger, einer Frequenzversatzkompensation an einem Subträger, der durch die Zelle empfangen wird und zum Tragen einer Interferenzquellendetektionssequenz verwendet wird, um einen kompensierten empfangenen Subträger zu erlangen, der mit einem lokalen Subträger der Zelle abgeglichen ist;
Durchführen (S102), durch die Zelle, einer korrelativen Verarbeitung an der Interferenzquellendetektionssequenz, die durch den Subträger getragen wird, der durch die Zelle empfangen wird, durch Verwenden einer lokalen Interferenzquellendetektionssequenz, die lokal generiert wird; und
als Reaktion darauf, dass bestimmt wird, dass ein Ergebnis der durch die Zelle durchgeführten korrelativen Verarbeitung korrelativ ist, Bestimmen (S103), durch die Zelle, einer Zelle, die die Interferenzquellendetektionssequenz als die Interferenzquelle überträgt;
wobei der Systemreferenzsubträger durch das TD-LTE-System definiert ist, die Frequenzversatzkompensation sich auf eine Kompensation für einen Frequenzversatz relativ zu dem Systemreferenzsubträger bezieht.

2. Verfahren nach Anspruch 1, wobei vor dem Durchführen (S101), durch die Zelle, gemäß dem Systemreferenzsubträger, der Frequenzversatzkompensation an dem Subträger, der durch die Zelle zu übertragen ist und zum Tragen der Interferenzquellendetektionssequenz verwendet wird, um den kompensierten zu übertragenden Subträger zu erlangen, der mit dem Systemreferenzsubträger abgeglichen ist, und dem Durchführen, durch die Zelle, gemäß dem Systemreferenzsubträger, der Frequenzversatzkompensation an dem Subträger, der durch die Zelle empfangen wird und zum Tragen der Interferenzquellendetektionssequenz verwendet wird, um den kompensierten empfangenen Subträger zu erlangen, der mit dem lokalen Subträger der Zelle abgeglichen ist, das Verfahren ferner Folgendes umfasst:
Transformieren, durch die Zelle, einer Pilotsequenz in die Interferenzquellendetektionssequenz gemäß einer Gesamtanzahl an Subträgern, die in einer Aliasing-Bandbreite umfasst ist, die aufgrund von Bandbreitenüberlappung zwischen Zellen generiert wird; und
Durchführen einer inversen schnellen Fourier-Transformation an der transformierten Interferenzquellendetektionssequenz, um Zeitbereichsdaten zu erlangen, die der Interferenzquellendetektionssequenz entsprechen.

3. Verfahren nach Anspruch 2, wobei das Durchführen (S102), durch die Zelle, der korrelativen Verarbeitung an der Interferenzquellendetektionssequenz, die durch den Subträger getragen wird, der durch die Zelle empfangen wird, durch Verwenden einer lokalen Interferenzquellendetektionssequenz, die lokal generiert wird, Folgendes umfasst:
Durchführen, durch die Zelle, einer Verarbeitung eines konjugierten Skalarprodukts in einem Frequenzbereich an der lokalen Interferenzquellendetektionssequenz, die lokal generiert wird, und der Interferenzquellendetektionssequenz, die durch den Subträger getragen wird, der durch die Zelle empfangen wird, um korrelative Frequenzbereichsdaten zu erlangen; und
Durchführen einer inversen schnellen Fourier-Transformation an den erlangten korrelativen Frequenzbereichsdaten, um korrelative Zeitbereichsdaten zu erlangen.

4. Verfahren nach Anspruch 3, wobei die lokale Interferenzquellendetektionssequenz durch Folgendes erlangt wird:
Transformieren, durch die Zelle, lokal gespeicherten Pilotsequenz von anderen Zellen in die lokale Interferenzquellendetektionssequenz gemäß einer Gesamtanzahl an Subträgern, die in der Aliasing-Bandbreite umfasst ist, die aufgrund von Bandbreitenüberlappung zwischen Zellen generiert wird.

5. Verfahren nach Anspruch 3, wobei die Interferenzquellendetektionssequenz, die durch den Subträger getragen wird, der durch die Zelle empfangen wird, durch Folgendes erlangt wird:
Durchführen, durch die Zelle, einer schnellen Fourier-Transformation an den empfangenen Zeitbereichsdaten, und
Extrahieren der Interferenzquellendetektionssequenz aus Frequenzbereichsdaten, die aus der schnellen Fourier-Transformation erlangt werden.

6. Verfahren nach Anspruch 3, umfassend: Bestimmen, ob ein Ergebnis der korrelativen Verarbeitung korrelativ ist, durch Durchführen einer Zeitbereichsspitzenwertsuche der korrelativen Zeitbereichsdaten.

7. Vorrichtung zur Positionierung einer Interferenzquelle, die an eine Zelle in einem System für Time Division Long Term Evolution, TD-LTE, angelegt ist, **dadurch gekennzeichnet, dass** die Vorrichtung Folgendes umfasst:
ein Kompensationsmodul (10), das konfiguriert ist zum Durchführen, gemäß einem Systemreferenzsubträger, einer Frequenzversatzkompensation an einem Subträger, der durch die Zelle zu übertragen ist und zum Tragen einer Interferenzquellendetektionssequenz verwendet wird, um einen kompensierten zu übertragenden Subträger zu erlangen, der mit dem Systemreferenzsubträger abgeglichen ist, und Durchführen,
durch die Zelle, gemäß dem Systemreferenzsubträger, einer Frequenzversatzkompensation an einem Subträger, der durch die Zelle empfangen wird und zum Tragen einer Interferenzquellendetektionssequenz verwendet wird, um einen kompensierten empfangenen Subträger zu erlangen, der mit einem lokalen Subträger der Zelle abgeglichen ist;
ein Modul (20) zur korrelativen Verarbeitung, das konfiguriert ist zum Durchführen einer korrelativen Verarbeitung an der Interferenzquellendetektionssequenz, die durch den Subträger getragen wird, der durch die Zelle empfangen wird, durch Verwenden einer lokalen Interferenzquellendetektionssequenz, die lokal generiert wird; und
ein Zellpositionierungsmodul (30), das als Reaktion darauf, dass bestimmt wird, dass ein Ergebnis der korrelativen Verarbeitung korrelativ ist, konfiguriert ist zum Bestimmen einer Zelle, die die Interferenzquellendetektionssequenz als die Interferenzquelle überträgt;
wobei der Systemreferenzsubträger durch das TD-LTE-System definiert ist, die Frequenzversatzkompensation sich auf eine Kompensation für einen Frequenzversatz relativ zu dem Systemreferenzsubträger bezieht.

8. Vorrichtung nach Anspruch 7, wobei das Kompensationsmodul (10) ferner vor dem Durchführen der Frequenzversatzkompensation an dem Subträger, der zu übertragen ist und zum Tragen der Interferenzquellendetektionssequenz verwendet wird, um den kompensierten zu übertragenden Subträger zu erlangen, der mit dem Systemreferenzsubträger abgeglichen ist, und dem Durchführen der Frequenzversatzkompensation an dem Subträger, der durch die Zelle empfangen wird und zum Tragen der Interferenzquellendetektionssequenz verwendet wird, um den kompensierten empfangenen Subträger zu erlangen, der mit dem lokalen Subträger der Zelle abgeglichen ist, konfiguriert ist zum Transformieren einer Pilotsequenz der Zelle in die Interferenzquellendetektionssequenz gemäß einer Gesamtanzahl an Subträgern, die in einer Aliasing-Bandbreite umfasst ist, die aufgrund von Bandbreitenüberlappung zwischen Zellen generiert wird; und Durchführen einer inversen schnellen Fourier-Transformation an der transformierten Interferenzquellendetektionssequenz, um Zeitbereichsdaten zu erlangen, die der Interferenzquellendetektionssequenz entsprechen.

9. Vorrichtung nach Anspruch 8, wobei das Modul (20) zur korrelativen Verarbeitung ferner konfiguriert ist zum Durchführen einer Verarbeitung eines konjugierten Skalarprodukts in einem Frequenzbereich an der lokalen Interferenzquellendetektionssequenz, die lokal generiert wird, und der Interferenzquellendetektionssequenz, die durch den empfangenen Subträger getragen wird, um korrelative Frequenzbereichsdaten zu erlangen; und Durchführen der inversen schnellen Fourier-Transformation an den erlangten korrelativen Frequenzbereichsdaten, um korrelative Zeitbereichsdaten zu erlangen.

10. Vorrichtung nach Anspruch 8, wobei das Modul (20) zur korrelativen Verarbeitung ferner konfiguriert ist zum Transformieren, gemäß der Gesamtanzahl an Subträgern, die der einer Aliasing-Bandbreite umfasst ist, die aufgrund von Bandbreitenüberlappung zwischen Zellen generiert wird, einer lokal gespeicherten Pilotsequenz von anderen Zellen in die lokale Interferenzquellendetektionssequenz.

11. Vorrichtung nach Anspruch 8, wobei das Modul (20) zur korrelativen Verarbeitung ferner konfiguriert ist zum Durchführen einer schnellen Fourier-Transformation an den empfangenen Zeitbereichsdaten, und die Interferenzquellendetektionssequenz aus Frequenzbereichsdaten extrahiert, die aus der schnellen Fourier-Transformation erlangt werden.

12. Vorrichtung nach Anspruch 9, wobei das Zellpositionierungsmodul (30) ferner konfiguriert ist zum Bestimmen, ob ein Ergebnis der korrelativen Verarbeitung korrelativ ist, durch Durchführen einer Zeitbereichsspitzenwertsuche der korrelativen Zeitbereichsdaten.

13. Computerlesbares Speichermedium, auf dem computerausführbare Anweisungen gespeichert sind, die bei Ausführung durch einen Computer den Computer dazu veranlassen, die Schritte des Verfahrens nach einem der Ansprüche 1 bis 6 auszuführen.

## Revendications

1. Procédé de positionnement d'une source d'interférence, appliqué à une cellule dans un système à évolution à long terme par répartition dans le temps, TD-LTE, **caractérisé en ce que** le procédé comprend :
l'exécution (S101), par la cellule, en fonction d'une sous-porteuse de référence du système, d'une compensation de décalage de fréquence sur une sous-porteuse devant être transmise par la cellule et utilisée pour transporter une séquence de détection de source d'interférence afin d'obtenir une sous-porteuse à transmettre compensée alignée avec la sous-porteuse de référence du système, et l'exécution, par la cellule, en fonction de la sous-porteuse de référence du système, d'une compensation de décalage de fréquence sur une sous-porteuse reçue par la cellule et utilisée pour transporter une séquence de détection de source d'interférence afin d'obtenir une sous-porteuse reçue compensée alignée avec une sous-porteuse locale de la cellule ;
l'exécution (S102), par la cellule, d'un traitement de corrélation sur la séquence de détection de source d'interférence transportée par la sous-porteuse reçue par la cellule au moyen d'une séquence de détection de source d'interférence locale qui est générée localement ; et
en réponse à la détermination selon laquelle un résultat du traitement de corrélation exécuté par la cellule est corrélatif, la détermination (S103), par la cellule, d'une cellule transmettant la séquence de détection de source d'interférence en tant que source d'interférence ;
dans lequel la sous-porteuse de référence du système est définie par le système TD-LTE, la compensation de décalage de fréquence faisant référence à la compensation d'un décalage de fréquence par rapport à la sous-porteuse de référence du système.

2. Procédé selon la revendication 1, dans lequel avant l'exécution (S101), par la cellule, en fonction de la sous-porteuse de référence du système, de la compensation de décalage de fréquence sur la sous-porteuse devant être transmise par la cellule et utilisée pour transporter la séquence de détection de source d'interférence afin d'obtenir la sous-porteuse à transmettre compensée alignée avec la sous-porteuse de référence du système, et l'exécution, par la cellule, en fonction de la sous-porteuse de référence du système, de la compensation de décalage de fréquence sur la sous-porteuse reçue par la cellule et utilisée pour transporter la séquence de détection de source d'interférence afin d'obtenir la sous-porteuse reçue compensée alignée avec la sous-porteuse locale de la cellule, le procédé comprend en outre :
la transformation, par la cellule, d'une séquence pilote en séquence de détection de source d'interférence en fonction d'un nombre total de sous-porteuses comprises dans une bande passante de repliement générée en raison du chevauchement de bande passante entre les cellules ; et
l'exécution d'une transformée de Fourier rapide inverse sur la séquence de détection de source d'interférence transformée pour obtenir des données du domaine temporel correspondant à la séquence de détection de source d'interférence.

3. Procédé selon la revendication 2, l'exécution (S102), par la cellule, du traitement de corrélation sur la séquence de détection de source d'interférence transportée par la sous-porteuse reçue par la cellule au moyen d'une séquence de détection de source d'interférence locale qui est générée localement comprend :
l'exécution, par la cellule, d'un traitement de produit scalaire conjugué dans un domaine fréquentiel sur la séquence de détection de source d'interférence locale qui est générée localement et la séquence de détection de source d'interférence transportée par la sous-porteuse reçue par la cellule pour obtenir des données corrélatives du domaine fréquentiel ; et
l'exécution d'une transformée de Fourier rapide inverse sur les données corrélatives du domaine fréquentiel obtenues pour obtenir des données corrélatives du domaine temporel.

4. Procédé selon la revendication 3, la séquence de détection de source d'interférence locale étant obtenue par :
la transformation, par la cellule, d'une séquence pilote enregistrée localement d'autres cellules en une séquence de détection de source d'interférence locale en fonction d'un nombre total de sous-porteuses comprises dans la bande passante de repliement générée en raison du chevauchement de bande passante entre les cellules.

5. Procédé selon la revendication 3, dans lequel la séquence de détection de source d'interférence transportée par la sous-porteuse reçue par la cellule est obtenue par :
l'exécution, par la cellule, d'une transformée de Fourier rapide sur les données du domaine temporel reçues, et l'extraction de la séquence de détection de source d'interférence à partir de données du domaine fréquentiel obtenues à partir de la transformée de Fourier rapide.

6. Procédé selon la revendication 3, comprenant : la détermination selon laquelle un résultat du traitement de corrélation est corrélatif en exécutant une recherche de valeur de crête du domaine temporel des données corrélatives du domaine temporel.

7. Appareil permettant de positionner une source d'interférence, appliqué à une cellule dans un système à évolution à long terme par répartition dans le temps, TD-LTE, **caractérisé en ce que** l'appareil comprend :
un module de compensation (10) conçu pour exécuter, en fonction d'une sous-porteuse de référence du système, une compensation de décalage de fréquence sur une sous-porteuse devant être transmise par la cellule et utilisée pour transporter une séquence de détection de source d'interférence afin d'obtenir une sous-porteuse à transmettre compensée alignée avec la sous-porteuse de référence du système, et exécuter, par la cellule,
en fonction de la sous-porteuse de référence du système, une compensation de décalage de fréquence sur une sous-porteuse reçue par la cellule et utilisée pour transporter une séquence de détection de source d'interférence afin d'obtenir une sous-porteuse reçue compensée alignée avec une sous-porteuse locale de la cellule ;
un module de traitement de corrélation (20) conçu pour exécuter un traitement de corrélation sur la séquence de détection de source d'interférence transportée par la sous-porteuse reçue par la cellule au moyen d'une séquence de détection de source d'interférence locale qui est générée localement ; et
un module de positionnement de cellule (30) conçu pour, en réponse à la détermination selon laquelle un résultat du traitement de corrélation est corrélatif, déterminer une cellule transmettant la séquence de détection de source d'interférence en tant que source d'interférence ;
dans lequel la sous-porteuse de référence du système est définie par le système TD-LTE, la compensation de décalage de fréquence faisant référence à la compensation d'un décalage de fréquence par rapport à la sous-porteuse de référence du système.

8. Appareil selon la revendication 7, dans lequel le module de compensation (10) est en outre conçu pour, avant d'exécuter la compensation de décalage de fréquence sur la sous-porteuse à transmettre et utilisée pour transporter la séquence de détection de source d'interférence afin d'obtenir la sous-porteuse à transmettre compensée alignée avec la sous-porteuse de référence du système, et d'exécuter la compensation de décalage de fréquence sur la sous-porteuse reçue par la cellule et utilisée pour transporter la séquence de détection de source d'interférence afin d'obtenir la sous-porteuse reçue compensée alignée avec la sous-porteuse locale de la cellule, transformer une séquence pilote de la cellule en la séquence de détection de source d'interférence en fonction d'un nombre total de sous-porteuses comprises dans une bande passante de repliement générée en raison du chevauchement de bande passante entre les cellules ; et exécuter une transformée de Fourier rapide inverse sur la séquence de détection de source d'interférence transformée pour obtenir des données du domaine temporel correspondant à la séquence de détection de source d'interférence.

9. Appareil selon la revendication 8, dans lequel le module de traitement de corrélation (20) est en outre conçu pour exécuter un traitement de produit scalaire conjugué dans un domaine fréquentiel sur la séquence de détection de source d'interférence locale qui est générée localement et la séquence de détection de source d'interférence transportée par la sous-porteuse reçue pour obtenir des données corrélatives du domaine fréquentiel ; et exécuter la transformée de Fourier rapide inverse sur les données corrélatives du domaine fréquentiel obtenues pour obtenir des données corrélatives du domaine temporel.

10. Appareil selon la revendication 8, dans lequel le module de traitement de corrélation (20) est en outre conçu pour transformer, en fonction du nombre total de sous-porteuses comprises dans une bande passante de repliement générée en raison du chevauchement de bande passante entre les cellules, une séquence pilote enregistrée localement d'autres cellules en la séquence de détection de source d'interférence locale.

11. Appareil selon la revendication 8, dans lequel le module de traitement de corrélation (20) est en outre conçu pour exécuter une transformée de Fourier rapide sur les données du domaine temporel reçues, et extrait la séquence de détection de source d'interférence à partir de données du domaine fréquentiel obtenues à partir de la transformée de Fourier rapide.

12. Appareil selon la revendication 9, dans lequel le module de positionnement de cellule (30) est en outre conçu pour déterminer si un résultat du traitement de corrélation est corrélatif en exécutant une recherche de valeur de crête du domaine temporel des données corrélatives du domaine temporel.

13. Support de stockage lisible par ordinateur sur lequel sont stockées des instructions exécutables par ordinateur qui, lorsqu'elles sont exécutées par un ordinateur, amènent l'ordinateur à exécuter les étapes du procédé selon l'une quelconque des revendications 1 à 6.
